# EUROPEAN PATENT APPLICATION

(11) **EP 1 990 106 A1**
(43) Date of publication of application: **12.11.2008**
(21) Application number: 06798399.9
(22) Date of filing: 28.09.2006
(51) Int. Cl.: B09B 3/00, C05F 17/00, C08J 11/14

(54) **ORGANIC WASTE DISPOSAL SYSTEM**

(71) Applicant: Eco Material Co.Ltd., Chuo-ku Sapporo-shi Hokkaido 060-0061 (JP); Gaea Clean 22 Co., Ltd., Otaru-shi Hokkaido 048-2672 (JP)
(72) Inventor: KATO, Ichiro, Sapporo-shi, Hokkaido; 060-0061 (JP); SHIGA, Haruo, Otaru-shi, Hokkaido; 048-2672 (JP)
(74) Representative: Thoma, Michael
(86) International application number: PCT/JP2006/319269
(87) International publication number: WO 2008/038361

(57) **Abstract**

[Object] To provide an organic waste treatment system in which general wastes from home, ordinary offices, and the like as well as industrial wastes including sludge, waste plastics, and the like can be subj ected to treatment such as decomposition by a hydrothermal reaction under a subcritical water condition and in which treated wastes can be taken out in a dried state, sorted, and recycled.

[Approach] In a waste treatment system for hydrolyzing organic wastes while stirring the wastes under a high-temperature and high-pressure environment and thermally decomposing or carbonizing the wastes in a double-walled pressure-resistant container 1, the system includes at least: water vapor supplymeans 9a for supplying high-heat saturated water vapor into the container 1; pressure regulating means 10 for regulating pressure in the container 1 by using an on-off valve; and stirring means 6 having a shaft 7 for stirring the charged wastes in the container 1 and provided to penetrate the container 1 and the system includes the steps of: hydrolyzing the wastes while adjusting temperature to 230°C or higher and pressure to 3 MPa in the container 1 and stirring the wastes and thermally decomposing or carbonizing the wastes; adjusting the pressure in the container 1 to atmospheric pressure or lower and discharging the treated wastes out of the container while maintaining a dried state of the wastes; and sorting the discharged treated wastes and forming at least one of fertilizer, feed, and auxiliary fuel depending on types of the wastes.

## Description

### Technical Field

The prevent invention relates to an organic waste treatment system in which general wastes from home, ordinary offices, and the like as well as industrial wastes including sludge, waste plastics, and the like can be subjected to treatment such as decomposition by a hydrothermal reaction under a subcritical water condition and in which treated wastes can be taken out in a dried state, sorted, and recycled.

### Background Technique

In a prior-art organic waste treatment system, wastes to be treated are separated in advance and the separated wastes are respectively charged into treatment apparatuses designed according to types of the wastes. For example, the waste plastics are charged into and treated in a plastic-specific treatment apparatus, rubber such as waste tires is charged into and treated in a rubber-specific treatment apparatus, waste newspaper, wastepaper, and the like are charged into and treated in a treatment apparatus for paper, and garbage is charged into and treated in a garbage-specific treatment apparatus, respectively.

Moreover, how to treat varies among types of the wastes. The wastepaper is subj ected to incineration in an incinerator. The waste newspaper is dissolved in a special solvent and recycled. The waste plastics and waste rubber are dissolved again and formed into structural materials or thermally decomposed and used as solid fuel or liquid fuel. The garbage is dried and used as fertilizer or animal feed.

For example, there are disclosed an apparatus for solidifying plastic wastes in Patent Document 1, an apparatus for treating the waste plastic to turn it into fuel in Patent Document 2, a treatment system for making feed and fertilizer in Patent Document 3, and a method and an apparatus for treating medical wastes by heating in Patent Document 4.

However, because the treatment apparatuses are designed according to the types of the wastes and how to treat them as described above, the treatment apparatus for the waste plastics cannot be used for treatment of rubber or garbage and the treatment apparatus for making feed and fertilizer cannot be used for treatment of the waste plastics, for example. Therefore, the treatment apparatuses adapted to the respective types of the wastes and how to treat them are necessary. However, it is close to impossible for local small municipalities to have so many treatment apparatuses.

Moreover, not all of wastes can be easily separated into the waste plastics, rubber, wastepaper, garbage, and the like. If anything, a major part of them cannot be separated. Especially because composite materials are used everywhere in recent products and many of the products cannot be separated easily even by disassembly. For example, there are an infinite number of inseparable wastes such as pieces of metal or glass protected by plastic, electric wires, metal plates or plastic plates on which rubber sheets are laminated, a plate into which a nail is driven, plastic products in which metal springs, pins, and gears are embedded, books including many sheets of synthetic paper. If they are treated by the above treatment apparatuses, the apparatuses break.

The above composite materials are normally collected as unburnable wastes. However, many of wastes collected as burnable wastes are not recommended for incineration in an incinerator. For example, animal carcasses, animal feces and urea, food residue, rotten sea food and farm produce give out foul smells to surroundings when they are incinerated. There are also infectious wastes from hospitals and the like, and more specifically, used bandages, cotton, diapers, sheets, and the like from medical institutions and medical sites such as hospitals. These wastes are collected by specialized sanitation engineers and need be sterilized or disinfected before incineration, because pathogens, bacteria, viruses, and the like may be released into the atmosphere or may remain in incineration ash if the collected wastes are incinerated as they are in the incinerator.

There is also litter laid on floors of containers and vehicles in transporting and conveying horses, cattle, pigs, and the like. Because the horses and the like directly excrete feces and the like onto the litter, it is necessary to dispose of feces and urine together with the litter. However, microbes and bacteria propagate in such litter and they may not die but be released into the atmosphere together with smoke exhaust or remain in incineration ash if the litter is incinerated in an incinerator.

In recent years, incineration of wastes in incinerators is subjected to criticism from a viewpoint of global environment protection and the incineration of waste plastics in the incinerators may damage the incinerators or generate harmful substances such as dioxin and is therefore strictly restricted by laws, ordinances, and the like.

Therefore, development of a method and an apparatus for disposing of composite materials which cannot be separated easily and for suitably disposing of wastes which are not recommended for incineration in the incinerator is an urgent necessity. Inventors of the present invention have developed a method and an apparatus for this purpose before and has already filed a patent application (Patent Document 5). In Patent Documents 6, 7, and 8, similar methods and apparatuses are proposed.

A system disclosed in Patent Document 5 is for treating wastes and other general materials under a high-temperature and high-pressure environment so that they can be recycled into heat generating molded body and is an excellent system. However, gas and vapor in a pressure-resistant container are released outside when the container is opened after the treatment and pathogens, microbes, bacteria, and the like may be dispersed into the atmosphere if they still exist. In this point, the system has still some room for improvement.

Decomposition treatment method and apparatus disposed in Patent Document 6 are for performing decomposition treatment of persistent wastes at a temperature of critical or lower pressure by utilizing a hydrothermal reaction. Because they are of a continuous type, the apparatus becomes complicated.

A method of treating organic wastes disclosed in Patent Document 7 is a method of performing oxidation in high-temperature and high-pressure vapor equal set of temperature equal to or higher than the supercritical temperature and pressure lower than the supercritical pressure of water. Because the set temperature is as high as 500°C or higher and the set pressure is as high as 5 MPa to 22 MPa, it is difficult and expensive to develop the apparatus resistant to such temperature and pressure.

A high-temperature and high-pressure treatment apparatus disclosed in Patent Document 8 is for continuously oxidizing organic wastes in a state of supercritical or subcritical water. Because treatment conditions of subcritical water suitable for an oxidative decomposition reaction are temperature of 250°C or higher and treatment pressure of 5 to 10 MPa, it is difficult and too expensive to develop the apparatus for continuously performing oxidation under these conditions.

In the above inventions disclosed in Patent Documents 5 to 8, the wastes are decomposed by using the hydrothermal reaction. For taking the decomposed wastes out of the treatment apparatus, temperature and pressure in the apparatus are returned to room temperature and atmospheric pressure. As a result, water vapor returns to a state of water to make the treated wastes swamped and make it difficult to take the wastes out of the apparatus. Recycling of the treated wastes requires drying of the wastes again and is too expensive.
Patent Document 1: Japanese Patent Application Laid-open No. 2005-178327
Patent Document 2: Japanese Patent Application Laid-open No. 6-91649 Patent Document 3: Japanese Patent Application Laid-open No. 2004-262720
Patent Document 4: Japanese Patent Application Laid-open No. 2002-102819
Patent Document 5: Japanese Patent Application Laid-open No. 2004-321855
Patent Document 6: Japanese Patent Application Laid-open No. 10-147662
Patent Document 7: Japanese Patent No. 3440835
Patent Document 8: Japanese Patent Application Laid-open No. 2004-290819

### DISCLOSURE OF THE INVENTION

### Problems to be Solved by the Invention

With the above problems of the prior-art waste treatment apparatuses in view, it is an object of the present invention to provide an organic waste treatment system in which general wastes from home, ordinary offices, and the like in addition to industrial wastes including sludge, waste plastics, and the like canbe subjected to treatment such as decomposition by a hydrothermal reaction under a subcritical water condition and in which treated wastes can be taken out in a dried state, sorted, and recycled.

### Means to Solve the Problems

To achieve the above object, according to the invention, there is provided an organic waste treatment system for hydrolyzing organic wastes while stirring the wastes under a high-temperature and high-pressure environment and thermally decomposing or carbonizing the wastes in a double-walled pressure-resistant container, wherein the system comprises at least: water vapor supply means for supplying high-heat saturated water vapor into the container; pressure regulating means for regulating pressure in the container by using an on-off valve; and stirring means having a shaft for stirring the charged wastes in the container and provided to penetrate the container and the system includes the steps of: hydrolyzing the wastes while adjusting temperature to 230°C or higher and pressure to 3 MPa in the container and stirring the wastes and thermally decomposing or carbonizing the wastes; adjusting the pressure in the container to atmospheric pressure or lower and discharging the treated wastes out of the container while maintaining a dried state of the wastes; and sorting the discharged treated wastes and forming at least one of fertilizer, feed, and auxiliary fuel depending on types of the wastes.

According to the invention, in the above structure, the system may further comprise forcibly discharging means for forcibly discharging water vapor to discharge the water vapor generated in drying to an outside of the pressure-resistant container and the discharged water vapor may be used to operate a gas turbine to generate electricity by using the power. Moreover, the dried state of the treated wastes is preferably maintained by supplying high-heat water vapor into a clearance between an outer wall and an inner wall of the double wall of the pressure-resistant container and maintaining temperature at 160 to 180°C and pressure at 1 MPa in the clearance.

The organic wastes to be treated by the system of the invention are at least one type of industrial wastes of sludge, waste plastics, wastepaper, wood waste, animal solidwastes, plant and animal residue, animal feces and urine, animal carcasses, and infectious specially-controlled industrial wastes and are at least one type of general wastes of general wastes from business activities, household wastes, infectious specially-controlled general wastes, separated garbage, and food residue.

In the system of the invention, auxiliary fuel is formed as powder or pellets. Incineration ash after use of the auxiliary fuel can be molded by a molding device and used as structural materials.

Next, specific examples of the organic wastes which can be treated by the system of the invention are used litter, garbage such as rotten meat and vegetables, sea food residue, and unsold box lunches, wrapping paper, corrugated cardboard, plastics such as plastic packages and bags, plastic bottles, and Styrofoam, timber chips, felled trees, grass, sludge accumulated in sewers and rivers, treated sludge from water treatment plant, and stockbreeding wastes.

Here, a principle of treatment of the invention will be described. The system of the invention is a high-temperature and high-pressure sterilization apparatus. Because objects to be treated are limited to organic wastes and the organic wastes are made sterile and harmless, treatment under supercritical water condition is unnecessary and the hydrothermal reaction under the subcritical water condition is sufficient. For the treatment, saturated water vapor is supplied into the apparatus to thereby carry out the treatment under the subcritical condition. In other words, the treatment is carried out in high-temperature and high-pressure water.

In general, water is characterized by a high dissociation property and a high dielectric constant. In water at room temperature, acid or alkaline property develops depending on hydrogen ion concentration. A reaction in which hydrogen ion and hydroxide ion of water react respectively to decompose a substance is known as hydrolysis. A union through oxygen of an inorganic compound or an organic compound, i . e. , ester and ether linkages in case of an organic compound and oxides in case of an inorganic compound, is decomposed by water by mutually using hydroxides as bridges.

Moreover, in the high-temperature and high-pressure state, a degree of dissociation of water increases as the temperature rises, reaches its peak around 250°C, and then decreases. This means that acid or alkaline property of water is considerably affected by variation of temperature. In other words, under subcritical saturated vapor pressure, because the degree of dissociation of water is high, acid and alkaline properties are strong and water becomes a reactive solvent. Therefore, in subcritical water, hydrolysis reaction is caused by reactive water molecules and the reaction becomes the most intense around 300°C.

Moreover, because a gaseous phase and a liquid phase are mixed under the saturated vapor pressure, a hydrolysis reaction takes precedence in the liquid phase and a dehydration condensation reaction takes precedence in the gaseous phase. In general, under the subcritical saturated vapor pressure, it is said that an ionic reaction and the hydrolysis reaction accelerate in the liquid phase and that a radical reaction takes precedence in the gaseous phase. Such reactions in the subcritical water and supercritical water are known as hydrothermal reactions.

As described above, the system of the invention utilizes the hydrothermal reaction under the subcritical saturated vapor pressure and does not discharge inner air before treatment. Therefore, the treatment is carried out in the presence of oxygen and an oxidation reaction occurs due to the presence of oxygen in a low-temperature region of about 230°C. The oxidation reaction is a reaction for taking electrons. In general, it becomes easier to take and give electrons through the medium of water. The oxidation reaction under such a hydrothermal condition is known as a hydrothermal oxidation reaction.

The system of the invention can treat waste plastics as well as easily decomposable litter, medical wastes, and the like out of organic wastes. Major waste plastics, i.e., polyolefin, polystyrene, and polyvinyl chloride are thermally decomposed depending on temperature in general. However, it is known that these plastics of thermostability of polyvinyl chloride, polystyrene, and polyolefin is high in that order and that a rate of volatility in a vacuum is extremely low at about 200°C and a contribution of thermal decomposition to the treatment in the system of the invention is considered to be small. In the system of the invention, it is assumed from the above-described reaction mechanism in the subcritical water that the waste plastics are decomposed by the hydrolysis reaction and ionic reaction in the liquid phase and by the dehydration condensation reaction, radical reaction, thermal decomposition, and hydrothermal oxidation in the gaseous phase under the subcritical water condition of 230°C. Moreover, the treatment residue is assumed to be undecomposed waste plastics. Such decomposed matters are discharged from the system of the invention together with the vapor, pass through the cyclone where dust or the like is removed, and most of the remaining vapor is cooled and liquefied by gas-liquid contact with cooling water in the capacitor and subjected to microbial treatment and wastewater treatment by using activated carbon. The undecomposed matters in the surplus gas are subjected to secondary treatment by a burning method and discharged.

### EFFECTS OF THE INVENTION

According to the present invention, by using one organic waste treatment system, it is possible to carry out treatment such as decomposition by the hydrothermal reaction under the subcritical water condition of industrial wastes such as sludge, waste plastics, wastepaper, wood waste, animal solidwaste, plant and animal residue, animal feces and urine, animal carcasses, and infectious specially-controlled industrial wastes and general wastes such as general wastes from business activities, household wastes, infectious specially-controlled general wastes, separated garbage, and food residue and it is also possible to treat composite materials which cannot be separated. Therefore, it is unnecessary to provide a plurality of treatment apparatuses for respective types of the wastes as in the prior-art systems to thereby reduce the treatment cost.

Moreover, because the system of the invention can sterilize and kill the microbes and bacteria propagating in the litter and pathogens adhering to the medical wastes by the hydrothermal oxidation reaction under the high-temperature and high-pressure condition by using water vapor, it is possible to obtain a particular effect of easily treating the wastes which could not be treated before disinfection or sterilization in the prior art.

Furthermore, because the system of the invention carries out treatment such as decomposition of the organic wastes in a hermetically sealed container, it is possible to obtain an effect of not exhaling foul smells outside even during treatment of garbage, stockbreeding wastes, sludge, rotten sea food, meat, and farm produce.

Moreover, because the wastes to be treated are different depending on season and the time of day or year, the system of the invention can treat the waste plastics and waste rubber together when there are large amounts of them. It is also possible to take the treated wastes out of the pressure-resistant container in the dried state and to recycle them as auxiliary fuel. Moreover, when there are large amounts of litter, animal solid wastes, plant and animal residue, animal feces and urine, animal carcasses, sea food, and the like, it is possible to obtain an effect of treating them together, taking the treated wastes out of the pressure-resistant container in the dried state, and recycling them as feed and fertilizer.

### BEST MODES FOR CARRYING OUT THE INVENTION

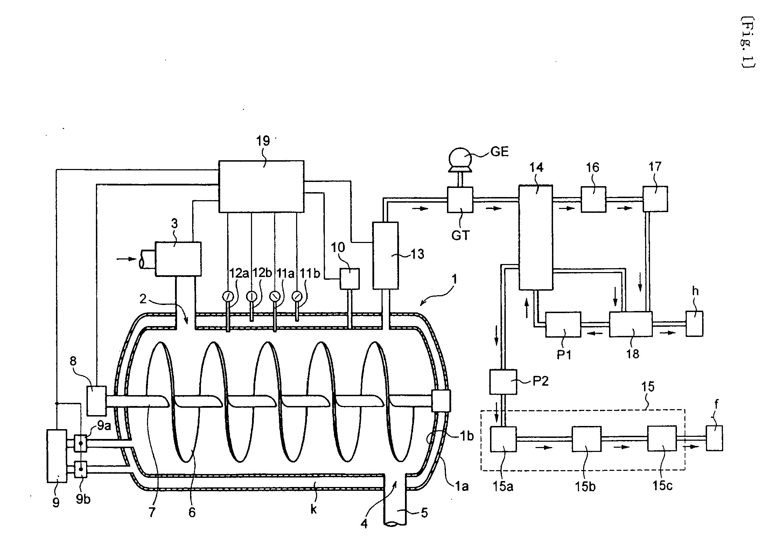

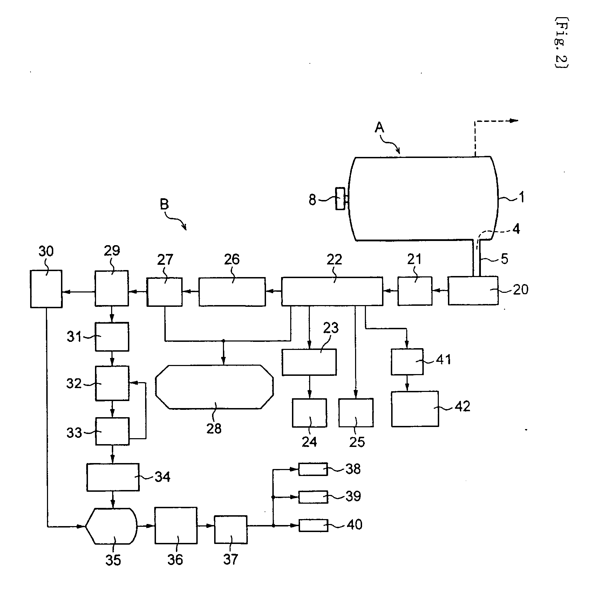

Next, an embodiment of the present invention will be described based on the drawings. FIG. 1 is a sectional view of an example of an organic waste treatment apparatus A of a waste treatment system of the present invention. FIG. 2 is a block diagram of an example of the waste treatment systemof the invention into which the treatment apparatus A of FIG. 1 is integrated.

In FIG. 1, a reference numeral A designates an organic waste treatment apparatus which is a main portion of a waste treatment system of the invention, 1 designates a double-walled heat-resistant and pressure-resistant container forming the organic waste treatment apparatus A, 1a designates an outer wall of the heat-resistant and pressure-resistant container 1, and 1b is an inner wall of the same. A proper clearance k is provided between the outer wall 1a and the inner wall 1b. In the clearance k, high-temperature vapor is supplied and circulates as will be described later. As the heat-resistant and pressure-resistant container 1, a container resistant to internal temperature of 600°C and internal pressure of 5 MPa is used here.

A reference numeral 2 designates a waste charge port through which wastes are charged into the heat-resistant and pressure-resistant container 1 and 3 designates a waste charging device for storing the wastes to be charged into the heat-resistant and pressure-resistant container 1 through the waste charge port 2 and charging the wastes at proper intervals while maintaining hermeticity. A reference numeral 4 designates a discharge port of treated wastes that have been subjected to treatment such as decomposition in the heat-resistant and pressure-resistant container 1 and 5 designates a discharge pipe mounted to the discharge port 4.

A reference numeral 6 designates a screw blade as a stirring means provided in the heat-resistant and pressure-resistant container 1. The screw blade 6 is attached to a shaft 7 provided to penetrate the container 1 and rotated by a motor 8. The wastes charged into the heat-resistant and pressure-resistant container 1 are stirred by the screw blade 6 and are moved forward and backward in the container 1 by controlling the motor 8 for normal and reverse rotations.

A reference numeral 9 designates a vapor generating device, 9a designates an intra-container vapor supply device for supplying water vapor generated in the vapor generating device 9 into the heat-resistant and pressure-resistant container 1 and 9b designates an intra-wall vapor supply device for supplying water vapor generated in the vapor generating device 9 into the clearance k between the outer wall 1a and the inner wall 1b of the heat-resistant and pressure-resistant container 1.

A reference numeral 10 designates a pressure regulating device that is connected to the heat-resistant and pressure-resistant container 1 by a connecting pipe 10a and is for adjusting pressure in the container 1 to predetermined pressure by using an on-off valve (not shown). A reference numeral 11a designates a pressure sensor for measuring pressure in the heat-resistant and pressure-resistant container 1 and 11b designates a pressure sensor for measuring pressure in the clearance k between the outer wall 1a and the inner wall 1b of the heat-resistant and pressure-resistant container 1. A reference numeral 12a designates a temperature sensor for measuring temperature in the heat-resistant and pressure-resistant container 1 and 12b designates a temperature sensor for measuring temperature in the clearance k between the outer wall 1a and the inner wall 1b of the heat-resistant and pressure-resistant container 1. By these pressure sensors 11a, 11b and the temperature sensors 12a and 12b, the pressure and temperature in the heat-resistant and pressure-resistant container 1 are always monitored during treatment of the wastes.

A reference numeral 13 designates a cyclone that is connected to the heat-resistant and pressure-resistant container 1 through the on-off valve to forcibly draw in the water vapor generated in the container 1 and discharge the water vapor out of the container 1. At the same time, surplus gas generated in decomposition of the organic waste is taken out, dust or the like is separated from the gas, and most of the residual gas and water vapor is cooled and liquefied by gas-liquid contact with cooling water in a capacitor 14 and subjected to microbial treatment and wastewater treatment by using activated carbon. A reference numeral 15 designates a wastewater treatment setup 15 for this purpose, 15a designates a flow rate regulating tank, 15b designates an aeration tank, and 15c designates a discharge tank. A reference numeral 16 designates a vacuum pump connected to the capacitor 14, 17 designates a deodorizing device, and 18 designates a cooling tower and these are for exhausting surplus gas. The cooling tower 18 has also a function of deodorizing a room such as a factory as a scrubber. These also perform a function of forcibly discharging water vapor in the heat-resistant and pressure-resistant container 1. A reference numeral P1 designates a cooling pump, P2 designates a drain pump, h designates exhaust, and f designates discharge.

In the invention, the water vapor discharged from the cyclone 13 is high-temperature and high-pressure. In order to effectively use the water vapor, a gas turbine GT is provided upstream from the capacitor 14 and is operated to thereby rotate a generator GE to generate electricity.

A reference numeral 19 is a central control unit of the organic waste treatment apparatus A. The central control unit 19 controls, based on measurement results of pressures and temperatures in the heat-resistant and pressure-resistant container 1 and the clearance k between the outer wall 1a and the inner wall 1b by the pressure sensors 11a, 11b and the temperature sensors 12a, 12b and through control signal cables, actuation of the all devices provided to the heat-resistant and pressure-resistant container 1, i.e., the waste charging device 3 provided to the waste charge port 2, the motor 8 for rotating the screw blade 6, the vapor generating device 9, the intra-container vapor supply device 9a for supplying high-heat saturated water vapor into the heat-resistant and pressure-resistant container 1, the intra-wall vapor supply device 9b for supplying water vapor into the clearance k between the outer wall 1a and the inner wall 1b of the heat-resistant and pressure-resistant container 1, and on-off valves of the pressure regulating device 10 for regulating pressure in the heat-resistant and pressure-resistant container 1 and the cyclone 13.

In the organic waste treatment apparatus A of the system of the invention, while the central control unit 19 controls actuation of the above respective devices, the temperature is regulated to 230°C or higher and the pressure is regulated to 3 MPa in the heat-resistant and pressure-resistant container 1 and the screw blade 6 is rotated to stir the organic wastes in the container 1 to thereby dry, hydrolyze and thermally decompose or carbonize the organic wastes. During drying, the on-off valve of the cyclone 13 is opened to release the generated water vapor out of the heat-resistant and pressure-resistant container 1 but the pressure regulating device 10 maintains the pressure in the heat-resistant and pressure-resistant container 1 at 3 MPa or higher. In the organic waste treatment apparatus A of the system of the invention, the hydrothermal reaction under the subcritical water condition is utilized to decompose the wastes as described above and therefore the temperature in the heat-resistant and pressure-resistant container 1 is maintained below 500°C. Because the pressure in the heat-resistant and pressure-resistant container 1 is also increased due to gas generated during treatment of the organic waste, the on-off valve is opened to take the surplus gas out of the container 1 to thereby adjust pressure in the container. To take out the gas, the gas is passed through the cyclone 13 to separate dust or the like.

To discharge residues from the discharge port 4 after the treatment of the organic wastes, the pressure regulating device 10 adjusts the pressure in the heat-resistant and pressure-resistant container 1 to the atmospheric pressure or lower. Otherwise, the water vapor and gas in the heat-resistant and pressure-resistant container 1 is released at a dash into the atmosphere and microbes and pathogens may be released together into the atmosphere if they have not died and are remaining in the residues after the treatment.

Moreover, in the invention, to make it possible to take the treated wastes out of the heat-resistant and pressure-resistant container 1 in the dried state, the intra-wall vapor supply device 9b supplies high-temperature water vapor into the clearance k between the outer wall 1a and the inner wall 1b of the heat-resistant and pressure-resistant container 1 to maintain the temperature at 160 to 180°C and the pressure at 1 MPa in the clearance k. This is because the water vapor in the container 1 turns into water, mixes with the treated wastes, and becomes muddy, if the pressure in the heat-resistant and pressure-resistant container 1 is adjusted to the atmospheric pressure or lower and the temperature in the container 1 is returned to room temperature after the treatment of the organic wastes. Incidentally, the treated wastes that have become muddy cost much labor to take out of the heat-resistant and pressure-resistant container 1 and the wastes need be dried again for recycling, which involves excessively high cost.

5 cubic meters and about 3 tons of litter in which microbes are propagating was actually charged into the heat-resistant and pressure-resistant container 1 of the organic waste treatment apparatus A of the system of the present invention and treated at pressure of 3 MPa and temperature of 230°C in the container 1 and while normally and reversely rotating the screw blade 6 at a speed of about 36 rotations per minute. As a result, all of the litter could be carbonized in about 30 minutes. The residues in the discharge pipe 5 after the wastes had been taken out of the discharge port 4 were checked and no microbe or bacteria was found.

Similarly, organic medical wastes such as bandages, cotton, and sheets and including inorganic matters such as syringes given by a sanitation engineer on a trial basis were charged into the heat-resistant and pressure-resistant container 1 and treated at pressure of 3 MPa and temperature of about 240°C in the container 1 and while normally and reversely rotating the screw blade 6 at a speed of about 36 rotations per minute. As a result, all excluding the syringes could be carbonized in about 40 minutes. Treated wastes taken out of the discharge port 4 were checked and no pathogen was found and no pathogen was found in the remaining syringes.

Moreover, garbage such as food residue of meat, vegetables, fish, and the like and unsold box lunches, paper such as wrapping paper and wastepaper, corrugated cardboard, plastics such as plastic packages and bags, plastic bottles, and Styrofoam were respectively charged into the heat-resistant and pressure-resistant container 1 of the organic waste treatment apparatus A and submitted to a test and substantially all of them could be decomposed. From the plastics, combustible gas or liquid such as methane, ethylene, and propylene could be collected as fuel gas or fuel oil.

The above organic waste treatment apparatus A can also treat timber chips, felled trees, grass, sludge, stockbreeding wastes. These wastes were treated at pressure of 3 MPa and temperature of about 240°C in the container 1 and while normally and reversely rotating the screw blade 6 at a speed of about 36 rotations per minute. As a result, most of them could be treated, e.g., decomposed without generating foul smells. The wastes which could not be decomposed included no harmful substance such as dioxin and therefore it was found to be safe to dispose of them in soil as they are.

Next, with reference to FIG. 2, the organic waste treatment system of the invention in which the above organic waste treatment apparatus A is incorporated will be described. The discharge pipe 5 attached to the discharge port 4 of the organic waste treatment apparatus A is mounted with a sorting recycling device B for the treated wastes. In the sorting recycling device B, a reference numeral 20 designates a discharge conveyer connected to the discharge pipe 5 and 21 designates a hopper for temporarily storing the treated wastes sent by the conveyer 20.

A reference numeral 22 designates a sorter for sorting the treated wastes stored in the hopper 21 according to properties of them. If the sorter 22 determines that the treated wastes are suitable for fertilizer, the sorter 22 sends the wastes to a fertilizer forming system 23 and stores them as fertilizer in a fertilizer storage portion 24. The treated wastes suitable for fertilizer are wastes treated in the organic waste treatment apparatus A including sludge, animal solid waste, plant and animal residue, animal feces and urine, animal carcasses, general wastes from business activities, household wastes, separated garbage, food residue, and the like as well as used litter, rotten meat and vegetables, sea food residue, and the like.

If the sorter 22 determines that the treated wastes are suitable for feed, the sorter 22 sends the wastes to a feed storage portion 25 and stores them as feed. Wastes suitable for feed include animal solid wastes, animal carcasses, plant and animal residue, separated garbage, and the like.

Moreover, if the sorter 22 determines that the treated wastes are suitable for auxiliary fuel, the wastes are treated by a steam dryer 26 and then sifted through a sieve 27 to remove waste metal such as iron and copper, cans, glass, rubber not suitable for burning, pottery, and other foreign matter which are unnecessary solids and send them to an unnecessary matter collecting portion 28. Unnecessary solids are also sorted out by the sorter 22 and sent to the unnecessary matter collecting portion 28. The wastes suitable for auxiliary fuel are all general wastes excluding industrial wastes represented by waste plastics, wastepaper, and wood wastes and household wastes. Synthetic rubber can be also recycled as auxiliary fuel.

The treated wastes suitable for the auxiliary fuel are further sifted by a regulator 29 according to their size. While powder is stored in a powder storage portion 30 as powder auxiliary fuel, wastes of certain size are sent by a conveyer 31 to a granulating device 32 and formed into pellet size while they are circulated between the granulating device 32 and the next sieve 33 and are stored in a pellet storage portion 34.

The powder fuel and pellet products used 35 as the auxiliary fuel are collected as incineration ash 36. The incineration ash 36 can be charged into a molding device 37 as it is or after it is kneaded with proper solidifying material, organic binder, or the like to be formed into desired structural materials. As the structural materials, there are a system house 38 for which the molded materials are used, alternative construction materials 39, exothermic boards 40, for example. The powder fuel can be used in various forms. For example, the powder fuel can be used for a stove when it is let fall from an upper portion of a boiler stove against air blowing up like a tornado from a bottom portion and completely burned in the stove. Moreover, heat due to secondary combustion of exhausted exhaust gas is exchanged with water to supply hot water as a hot-water boiler. Moreover, it is possible to utilize the hot water for floor heating and road heating.

A reference numeral 41 designates a collecting portion of residues regarded as unsuitable for fertilizer, feed, or auxiliary fuel the sorter 22. The collected residues are finally disposed of as treated industrial wastes 42.

### POSSIBILITIES OF INDUSTRIAL APPLICATION

According to the organic waste treatment system of the invention, it is unnecessary to provide treatment apparatuses for respective types of waste as in a prior-art treatment system and it is possible to subject general wastes from home, ordinary offices, and the like as well as industrial wastes including sludge, waste plastics, and the like to treatment such as decomposition by a hydrothermal reaction under a subcritical water condition. Therefore, it is possible to reduce costs of waste treatment. Moreover, the treated wastes can be taken out in the dried state and therefore can be sorted as they are and recycled as fertilizer, feed, and auxiliary fuel, which is extremely economical.

Furthermore, the treatment system of the invention can decompose and dispose of the waste plastics and waste rubber without burning them and therefore does not generate harmful substances such as dioxin and can be said to be a safe system.

### BRIEF DESCRIPTION OF THE DRAWINGS

[FIG. 1]
   A sectional view of an example of an organic waste treatment apparatus A in a waste treatment system of the present invention.
[FIG. 2]
   A block diagram of an example of the waste treatment system of the invention into which the treatment apparatus A of FIG. 1 is incorporated.

### EXPLANATION OF REFERENCE NUMERALS

- 1: Heat-resistant and pressure-resistant container
- 2: Waste charge port
- 3: Waste charging device
- 4: Discharge port
- 5: Discharge pipe
- 6: Screw blade
- 7: Shaft
- 8: Motor
- 9: Vapor generating device
- 9a: Intra-container vapor supply device
- 9b: Intra-wall vapor supply device
- 10: Pressure regulating device
- 11a: Intra-container pressure sensor
- 11b: Intra-double-wall pressure sensor
- 12a: Intra-container temperature sensor
- 12b: Intra-double-wall temperature sensor
- 13: Cyclone
- 14: Capacitor
- 15: Wastewater treatment setup
- 16: Vacuum pump
- 19: Central control unit
- 20: Discharge conveyer
- 21: Hopper
- 22: Sorter
- 26: Steam dryer
- 27: Sieve
- 28: Unnecessary matter collecting portion
- 29: Regulator
- 30: Powder fuel storage portion
- 31: Conveyer
- 32: Granulating device
- 33: Sieve
- 34: Pellet storage portion
- 35: Use of auxiliary fuel
- 36: Incineration ash
- 37: Molding device
- 38: System house
- 39: Alternative construction materials
- 40: Exothermic boards
- 41: Residue collecting portion
- 42: Treated industrial waste
- k: Clearance
- GT: Gas turbine
- GE: Generator

## Claims

1. An organic waste treatment system for hydrolyzing organic wastes while stirring the wastes under a high-temperature and high-pressure environment and thermally decomposing or carbonizing the wastes in a double-walled pressure-resistant container, wherein the system comprises at least: water vapor supply means for supplying high-heat saturated water vapor into the container; pressure regulating means for regulating pressure in the container by using an on-off valve; and stirring means having a shaft for stirring the charged wastes in the container and provided to penetrate the container and
the system includes the steps of:
hydrolyzing the wastes while adjusting temperature to 230°C or higher and pressure to 3 MPa in the container and stirring the wastes and thermally decomposing or carbonizing the wastes;
adjusting the pressure in the container to atmospheric pressure or lower and discharging the treated wastes out of the container while maintaining a dried state of the wastes; and
sorting the discharged treated wastes and forming at least one of fertilizer, feed, and auxiliary fuel depending on types of the wastes.

2. The organic waste treatment system according to claim 1 further comprising forcibly discharging means for forcibly discharging water vapor to discharge the water vapor generated in drying to an outside of the pressure-resistant container.

3. The organic waste treatment system according to claim 2, wherein the discharged water vapor is used to operate a gas turbine to generate electricity by using the power.

4. The organic waste treatment system according to any one of claims 1 to 3, wherein the dried state of the treated wastes is maintained by supplying high-heat water vapor into a clearance between an outer wall and an inner wall of the double wall of the pressure-resistant container and maintaining temperature at 160 to 180°C and pressure at 1 MPa in the clearance.

5. The organic waste treatment system according to any one of claims 1 to 4, wherein the organic wastes are at least one type of industrial wastes of sludge, waste plastics, wastepaper, wood waste, animal solid wastes, plant and animal residue, animal feces and urine, animal carcasses, and infectious specially-controlled industrial wastes.

6. The organic waste treatment system according to any one of claims 1 to 4, wherein the organic wastes are at least one type of general wastes of general wastes from business activities, household wastes, infectious specially-controlled general wastes, separated garbage, and food residue.

7. The organic waste treatment system according to any one of claims 1 to 6, wherein auxiliary fuel is formed as powder or pellets.

8. The organic waste treatment system according to any one of claims 1 to 7, wherein incineration ash after use of the auxiliary fuel is molded by a molding device and used as structural materials.
